# FASCICULE DE BREVET EUROPEEN

(11) **EP 1 166 527 B1**
(45) Date de publication et mention de la délivrance du brevet: **19.03.2008**
(21) Numéro de dépôt: 01907684.3
(22) Date de dépôt: 24.01.2001
(51) Int. Cl.: H04L 29/06

(54) **RELAIS DE SECURITE MULTIAPPLICATIF**
MEHRANWENDUNG-SICHERHEITSRELAIS
MULTILEVEL SECURITY RELAY

(30) Priorité: 27.01.2000 FR 0001054
(43) Date de publication de la demande: 02.01.2002
(73) Titulaire: BULL S.A., 78430 Louveciennes (FR)
(72) Inventeur: CUNCHON, François, F-78114 Magny les Hameaux (FR); MARTIN, René, F-91440 Bures sur Yvette (FR); N'GUYEN, Van-Dung, F-94450 Limeil Brevannes (FR)
(74) Mandataire: Pellegrini, Marie Claude
(86) Numéro de dépôt international: PCT/FR2001/000224
(87) Numéro de publication internationale: WO 2001/056247

(56) Documents cités:
- EP-A- 0 849 680
- US-A- 5 828 832
- US-A- 5 940 591

## Description

Le domaine de l'invention est celui des réseaux informatiques. L'expansion croissante de ces réseaux permet aux utilisateurs d'échanger des courriers électroniques dans la quasi totalité du monde, d'interroger des bases de données ou de conduire à distance des équipements informatiques.

Pour ce faire, un utilisateur dispose dans sa machine d'une application client, par exemple une messagerie électronique pour envoyer et recevoir des courriers, un navigateur tel que http: pour accéder à des pages de la Toile (Web en anglais) sur Internet ou une application telnet pour jouer le rôle de terminal distant. Une telle application client établit au moyen des réseaux informatiques, une connexion avec une application serveur hébergée dans une machine distante. Pour les courriers électroniques, le rôle de l'application serveur est de réceptionner des messages envoyés par des applications client et de les mettre à disposition dans une boîte à lettre que des applications client destinataires peuvent consulter. Pour des dialogues avec des pages de la Toile, le rôle de l'application serveur est de présenter les pages d'un site en collectionnant éventuellement des données reçues dans des champs spécifiques d'une page. Pour être conduit à distance, un équipement informatique héberge une application serveur telle que par exemple telnetd qui a accès localement aux fonctions de l'équipement informatique.

La convivialité d'établissement de ces connexions sur des réseaux publics tels qu'Internet, facilite entre autre le développement du commerce électronique. Une application client sur http: permet par exemple de consulter un catalogue de fournisseur sur un site mis à disposition par une application serveur de ce fournisseur, puis de passer une commande en ligne pour un article qui intéresse l'utilisateur de l'application client. Si la connexion établie pour la consultation en ligne d'un catalogue public ne pose pas de problème de confidentialité, il n'en est pas de même pour la connexion établie au moment d'un paiement en ligne de la commande.

Pour respecter la confidentialité sur un transfert de données par les réseaux informatiques publics, une application serveur dispose d'un port spécifique qui permet d'établir une connexion sécurisée avec l'application client. L'application client requiert la connexion sécurisée en invoquant par exemple le protocole connu https: dans le cas de dialogues avec des pages de la toile. Sur une connexion sécurisée, les messages échangés entre l'application client et l'application serveur sont cryptés par l'application émettrice et décryptés par l'application réceptrice.

Cependant, les opérations de cryptage et de décryptage sont gourmandes en ressources de calcul. Lorsque de nombreuses connexions sécurisées sont établies sur une application serveur avec plusieurs applications client, la charge en termes de ressources de calcul imposée par les opérations de cryptage et de décryptage, risque de nuire fortement aux performances de l'application serveur.

Généralement, une application serveur est hébergée dans une machine serveur reliée à un réseau serveur privé auquel sont souvent reliées d'autres machines serveur qui hébergent d'autres applications serveur d'une même entité. Or l'établissement d'une connexion sécurisée nécessite de nombreux échanges de messages préalables pour échanger des certificats d'identification et de cryptographie, échanger des clés privées et authentifier de façon sûre chacune des applications destinées à émettre au moyen de la connexion sécurisée. Ces échanges de messages, périphériques aux échanges de messages concernant effectivement une transaction sécurisée entre l'application serveur et l'application client, encombrent le réseau privé, risquant ainsi d'en réduire les performances.

Le document EP0849680, publié24/06/1998, décrit un procédé pour permettre à une application client d'établir une connexion sécurisée avec un port dans un serveur, passant par une couche réseau d'une machine passerelle, mais la charge en termes de ressources de calcul réside dans la machine serveur.

Les problèmes précédemment évoqués pour une machine serveur reliée à un réseau serveur privé, peuvent se retrouver de façon duale pour une machine client reliée à un réseau client privé.

Pour pallier les inconvénients précédemment cités, un premier objet de l'invention est un procédé permettant à une application client d'établir d'une manière transparente sur un réseau client, une première connexion ayant un premier niveau de sécurité, avec un premier port d'une application serveur hébergée dans une machine serveur reliée à un réseau serveur, pour émettre des messages adressés à la machine serveur, les dits messages passant du réseau client au réseau serveur par une couche réseau d'une machine passerelle,
caractérisé en ce qu'il comprend:
- une première étape qui crée un deuxième port dans la machine passerelle;
- une deuxième étape qui commande à la couche réseau de la machine passerelle, de dérouter vers le deuxième port, tout message à destination du premier port, adressé à la machine serveur;
- une troisième étape qui écoute le deuxième port;
- une quatrième étape qui génère dans la machine passerelle, une tâche pour établir ladite première connexion, lorsque la troisième étape détecte sur le deuxième port, une requête d'établissement de ladite première connexion.
   Ainsi, lorsque le réseau privé est le réseau serveur, les messages de la connexion sécurisée en provenance du réseau public via la première connexion, sont traités dans la machine passerelle (gateway en anglais) de façon à être transmis sur le réseau privé, constituant alors le réseau serveur, avec un niveau de sécurité plus faible, voire nul, qui soulage le réseau serveur et l'application serveur. Les traitements de sécurité sont déportés de la machine serveur vers la machine passerelle spécialement prévue à cet effet.
   Lorsque le réseau privé est le réseau client, les messages de la connexion faiblement ou pas sécurisée en provenance du réseau privé via la première connexion, sont traités dans la machine passerelle de façon à être transmis sur le réseau public, constituant alors le réseau serveur, avec un niveau de sécurité fort en évitant de surcharger le réseau client et l'application client. Les traitements de sécurité sont déportés de la machine client vers la machine passerelle spécialement prévue à cet effet.
   Un intérêt particulier du procédé selon l'invention est en ce que la deuxième étape rend le traitement par machine passerelle transparent à l'application client. C'est à dire que l'application client, ignorant le traitement dans la machine passerelle, établit une connexion directe avec la machine serveur qui héberge l'application serveur.
   De façon à mettre le procédé en oeuvre automatiquement dans la machine passerelle, une application relais de sécurité (secure application proxy en anglais) génère différents processus qui exécutent les étapes du procédé.
   Ceci permet au relais de sécurité de jouer le rôle de l'application serveur sur le réseau client. Le numéro du premier port et l'adresse réseau de la machine serveur distingue l'application serveur d'autres applications serveur en écoute possible sur le réseau serveur. En présence de plusieurs applications serveur en écoute sur le réseau serveur, le troisième port, propre alors à chaque application serveur, permet au relais de sécurité d'être multiapplicatif en ce qu'il joue le rôle de chaque application serveur pour laquelle le troisième port généré dynamiquement est distinct.
   Les moyens dont dispose le relais de sécurité sont activés en combinaison par un ou plusieurs processus exécutés par un système d'exploitation de la machine passerelle.
   De façon avantageuse, le relais de sécurité est caractérisé
- en ce qu'une demande de configuration par un utilisateur crée un processus père qui active les deux premières étapes;
- en ce que le processus père engendre un processus fils qui active plus particulièrement les étapes suivantes;
- en ce qu'à chaque ouverture d'une connexion à destination du premier port, le processus fils engendre une tâche qui disparaît à la fermeture de ladite connexion.

Chaque tâche (thread en anglais) dispose de la totalité de la mémoire du processus fils. Ainsi, une ouverture d'une nouvelle connexion à destination du premier port peut profiter de données d'une connexion précédente à destination du premier port, mémorisée au sein du processus fils.

Un exemple de mise en oeuvre de l'invention est expliqué dans la description qui suit en référence aux figures où:
- la figure 1 représente une architecture de réseau entre application client et application serveur;
- la figure 2 représente des messages échangés entre application client et application serveur non sécurisée;
- la figure 3 représente des messages échangés entre application client et application serveur sécurisée, mettant en oeuvre l'invention;
- la figure 4 représente les étapes d'un procédé conforme à l'invention;
- la figure 5 représente les phases d'une tâche conforme à l'invention;

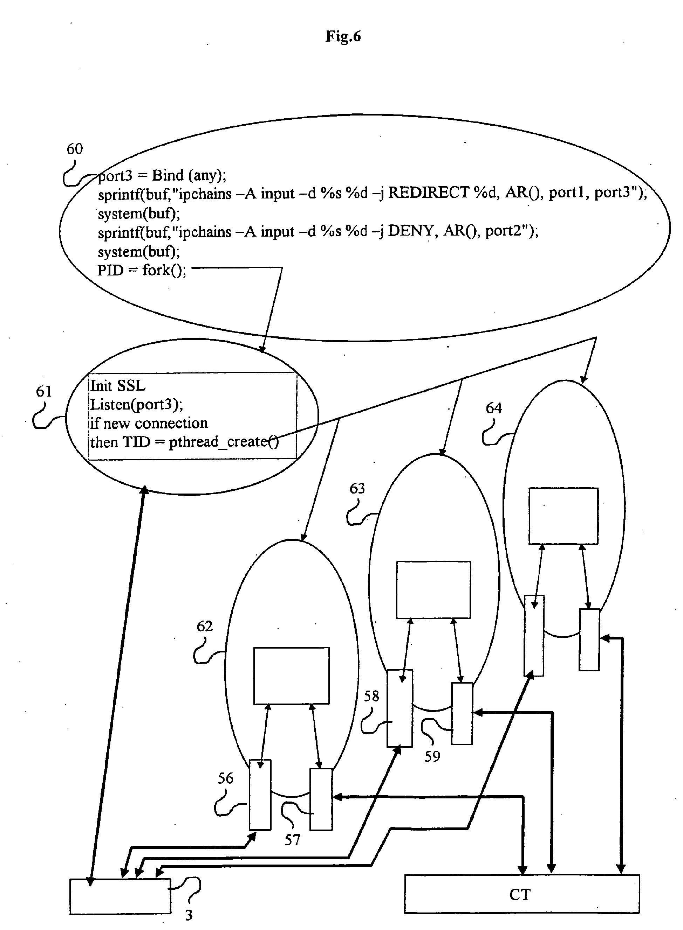

- la figure 6 représente les processus exécutés par une application relais de sécurité conforme à l'invention.

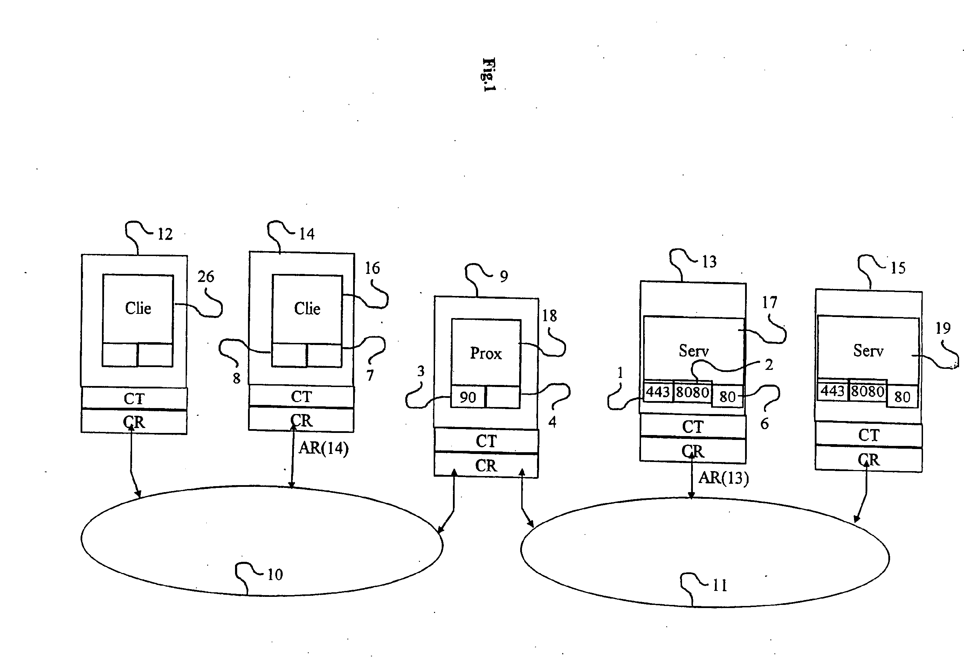

En référence à la figure 1, une machine client 14 héberge une ou plusieurs applications client 16. La machine client 14 est reliée à un réseau client 10 sur lequel elle est reconnue par une adresse réseau AR(14). Une machine serveur 13 héberge une ou plusieurs applications serveur 17. La machine serveur 13 est reliée à un réseau serveur 11 sur lequel elle est reconnue par une adresse réseau AR(13). Une machine passerelle 9 est reliée au réseau client 10 et au réseau serveur 11. De façon connue, chaque machine représentée sur la figure 1 dispose d'une couche transport CT et d'une couche réseau CR pour établir des connexions entre machines.

Le réseau client 10 est à prendre dans son sens le plus large, c'est à dire qu'il peut être constitué de façon connue et variée d'un réseau local et d'un réseau public reliés par un ou plusieurs routeurs dont les détails ne sont pas représentés pour ne pas surcharger inutilement la figure.

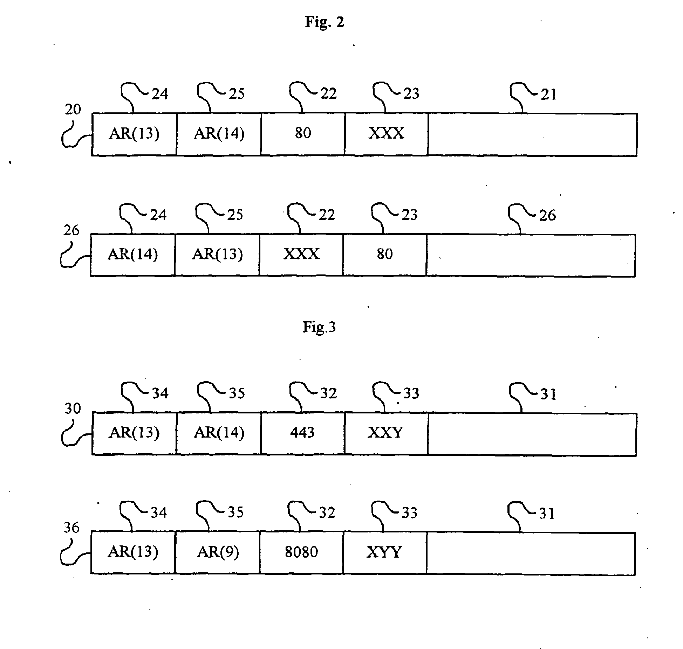

De façon connue en référence à la figure 2, telle que par exemple avec les protocoles TCP/IP sur Internet, l'application client 16 demande d'établir une connexion non sécurisée avec l'application serveur 17 en générant une requête 21 avec un numéro de port 6 de l'application serveur 17 et l'adresse réseau AR(13) de la machine 13. La requête 21 est transmise à la couche transport CT de la machine 14 qui place dans un champ destinataire 22 d'une entête transport de message 20, le numéro de port 6 et dans un champ émetteur 23, un numéro de port XXX alloué de façon dynamique pour le retour. Seule la valeur du numéro de port 6 a besoin d'être connue de l'application client 16, c'est par exemple la valeur 80 dans le monde Internet. La requête est transmise avec l'entête transport de la couche transport CT à la couche réseau CR de la machine 14. La couche CR de la machine 14 place dans un champ destinataire 24 d'une entête réseau, l'adresse réseau AR(13) de la machine 13 et dans un champ émetteur 25, l'adresse réseau AR(14) de la machine 14. Le message 20 ainsi constitué, est transmis de la couche réseau CR de la machine 14 sur le réseau client 10 qui achemine le message 20 sur la couche réseau CR de la machine 9. La couche réseau CR de la machine 9 transfert le message 20 du réseau client 10 sur le réseau serveur 11 qui achemine le message 20 sur la couche réseau CR de la machine 13. Le message 20 remonte de la couche réseau CR de la machine 13 à la couche transport CT qui délivre la requête 21 sur le port 6 de l'application serveur 17. La connexion est établie pour permettre aux applications client 16 et serveur 17 d'échanger des messages par cette connexion. Ainsi, la machine serveur 13 peut émettre un message de réponse 26 tel que le champ destinataire 24 contienne l'adresse AR(14), le champ émetteur 25 contienne l'adresse AR(13), le champ destinataire 22 contienne la valeur XXX du port alloué dynamiquement, le champ émetteur 23 contienne le numéro 80 du port 6.

Une connexion sécurisée se distingue d'une connexion non sécurisée par un premier port 1 de l'application serveur 17. Le numéro du port 1 a par exemple pour valeur 443 dans le cas d'une application sécurisée de navigation du monde Internet.

En référence à la figure 3, un message 30 de connexion sécurisée contient le numéro du port 1 dans le champ destinataire 32 de son entête transport.

Lorsque le message 30 se présente sur la couche réseau CR de la machine 9, en provenance du réseau client 10 pour une connexion avec l'application serveur 17, sécurisée sur le réseau client 10, le message 30 contient dans le champ destinataire 34 de l'entête réseau, l'adresse réseau AR(13) de la machine 13.

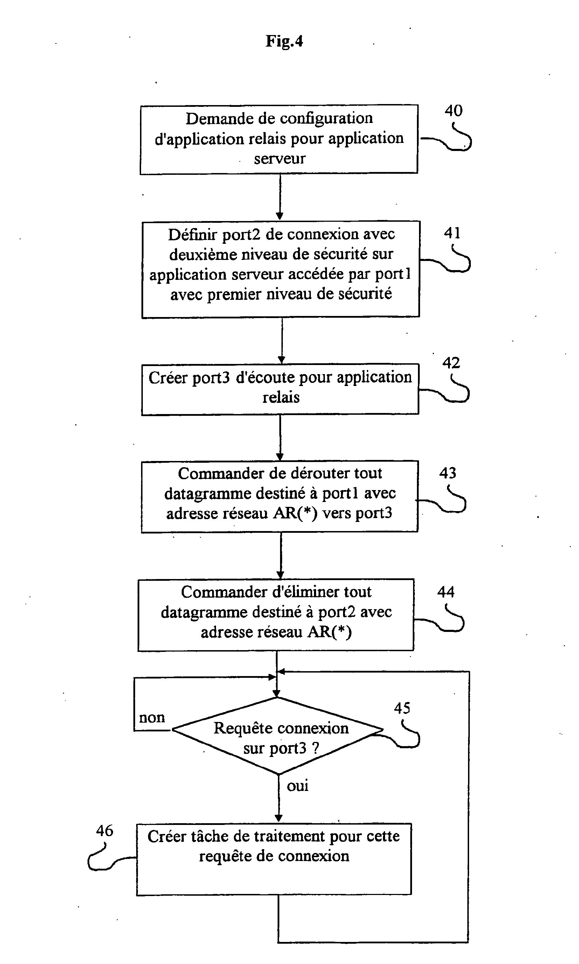

Un procédé pour permettre à l'application client 16 d'établir une connexion ayant un premier niveau de sécurité est décrit en référence à la figure 4. Le premier niveau de sécurité est à prendre dans son sens le plus large, il peut correspondre à des messages fortement cryptés si on souhaite une confidentialité sur le réseau 10 à l'épreuve de toute intrusion, faiblement cryptés si les conséquences d'une intrusion sur le réseau 10 sont mineures, voire non cryptés si la confidentialité des messages est parfaitement maîtrisée par ailleurs de part la nature du réseau 10, par exemple si le réseau 10 est privé.

Une première étape 42 crée un port 3 dans la machine passerelle 9. Comme nous le verrons par la suite, le port 3 est destiné à écouter les messages destinés à l'application serveur 17. C'est à dire que pour une connexion avec une autre application serveur 19, un autre port d'écoute est créé. Le port 3 n'a pas à être connu en dehors de la machine passerelle 9, il est donc créé dynamiquement par simple demande au système d'exploitation d'allouer un port de communication parmi ceux disponibles. Cette allocation dynamique offre l'avantage de pouvoir définir plusieurs ports, chacun associé à une application serveur différente.

Une deuxième étape 43 commande à la couche réseau CR de la machine 9 de dérouter vers le port 3, tout message à destination du port 1, adressé à la machine serveur 13. Un système d'exploitation tel que par exemple LINUX fournit une commande connue sous le nom
"ipchains -A input -j REDIRECT" qui prend en paramètres un port de destination, une adresse réseau de destination et un port de déroutement. En donnant à ces paramètres, respectivement la valeur du port 1, par exemple 443, la valeur d'adresse réseau AR(13) de la machine 13 et la valeur du port 3; la couche réseau CR de la machine passerelle 9 peut identifier tout datagramme de message 30 possédant dans son entête les valeurs des deux premiers paramètres et dérouter ainsi le message 30 dans la machine 9 vers le port dont la valeur est celle du troisième paramètre.

Une troisième étape 45 écoute le port 3. Une détection de requête de connexion sur le port 3 déclenche alors une quatrième étape 46.

La quatrième étape 46 génère une tâche de traitement pour la requête de connexion détectée en étape 45 de façon à traiter la connexion avec premier niveau de sécurité, en se substituant à l'application serveur 17 de la machine 13. Ce traitement de la connexion dans la machine passerelle 9 est transparent pour la machine client 14 car celle-ci émet ses messages à destination de l'application serveur 17 dans la machine 13. Le procédé continue ensuite en étape 45 de façon à pouvoir détecter d'autres requêtes de connexions en provenance de la machine 14 ou d'une autre machine client 12. Ce retour de l'étape 46 à l'étape 45 permet de générer une tâche distincte pour chaque requête de connexion.

L'avantage des étapes du procédé qui viennent d'être décrites est de limiter le premier niveau de sécurité au réseau client 10. De façon à permettre à l'application serveur 17 de communiquer avec l'application client 16 en utilisant un deuxième niveau de sécurité sur le réseau serveur 11, une cinquième étape 41 définit un port 2 de l'application serveur 17. Ce port 2 est destiné à recevoir des connexions avec le deuxième niveau de sécurité, sur des fonctionnalités de l'application serveur normalement accessibles avec le premier niveau de sécurité. Ces fonctionnalités sont généralement distinctes de fonctionnalités normalement accessibles, par exemple sur le port 6.

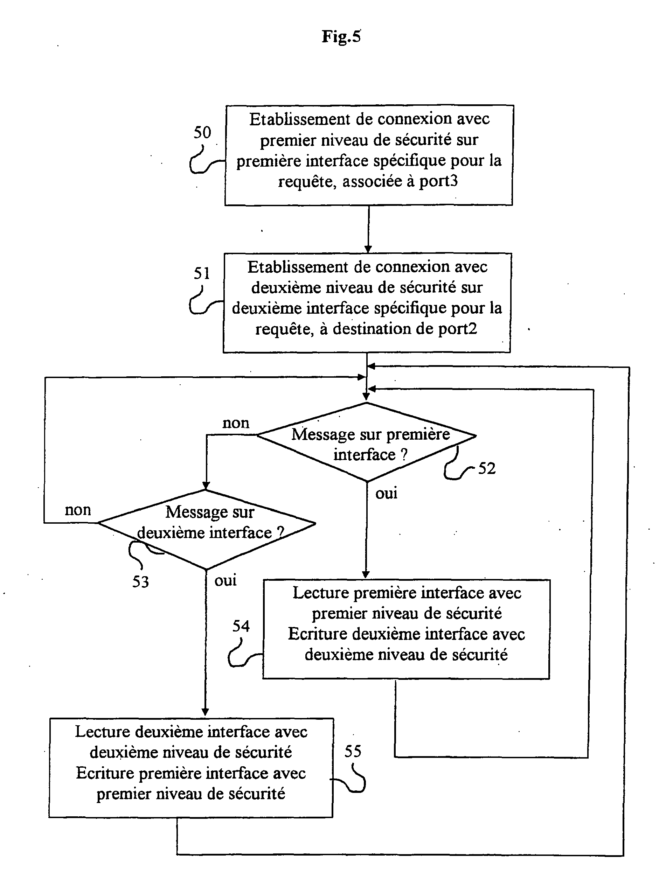

En référence à la figure 5, sont décrites différentes phases de mise en oeuvre de la tâche générée en étape 46.

Une première phase 50 établit la connexion avec premier niveau de sécurité. Pour ce faire, une première interface 56 de communication sur le port 3 est ouverte. Dans le cas du système d'exploitation LINUX, cette interface est connue sous le nom de "socket". Ainsi, chaque tâche et par conséquent chaque connexion avec premier niveau de sécurité dispose de son interface de communication propre. Ensuite un protocole de négociation de connexion avec premier niveau de sécurité est engagé sur cette première interface. Selon le degré du premier niveau de sécurité, ce protocole a pour but d'échanger des certificats d'identification et de cryptographie entre émetteurs et récepteurs. On peut citer à titre non limitatif un protocole connu tel que SSL.

La connexion établie en phase 50, est représentée sur la figure 5 par une phase 52 qui écoute la première interface 56 pour y détecter tout message entrant.

Une deuxième phase 51 établit une connexion avec deuxième niveau de sécurité. Pour ce faire, une deuxième interface de communication à destination du port 2 de la machine serveur 13, est ouverte. Dans le cas du système d'exploitation LINUX, cette interface.est connue sous le nom de "socket". Ainsi, chaque tâche dispose de sa deuxième interface de communication propre avec l'application serveur 17. Si par exemple le deuxième niveau de sécurité est nul, la connexion s'effectue de façon classique comme pour toute connexion non sécurisée.

La connexion établie en phase 51, est représentée sur la figure 5 par une phase 53 qui écoute la deuxième interface 56 pour y détecter tout message entrant.

Une détection de message entrant en phase 52 active une phase 54. La première interface est lue avec premier niveau de sécurité, c'est à dire que l'instruction de lecture est une fonction du premier niveau de sécurité qui tient compte d'éventuelles clés de cryptage associées à ce niveau de sécurité pour décrypter le message si celui-ci est crypté. Le message ainsi lu est écrit avec deuxième niveau de sécurité, sur la deuxième interface. De même que l'instruction de lecture, l'instruction d'écriture est une fonction du deuxième niveau de sécurité. Si le deuxième niveau de sécurité est nul, l'instruction d'écriture est une instruction classique. Si des clés de cryptage sont associées au deuxième niveau de sécurité, l'instruction d'écriture les prend en compte pour crypter le message.

Une détection de message entrant en phase 53 active une phase 55. La deuxième interface est lue avec deuxième niveau de sécurité, c'est à dire que l'instruction de lecture est une fonction du deuxième niveau de sécurité qui tient compte d'éventuelles clés de cryptage associées à ce niveau de sécurité pour décrypter le message si celui-ci est crypté. Le message ainsi lu est écrit avec premier niveau de sécurité, sur la première interface. De même que l'instruction de lecture, l'instruction d'écriture est une fonction du premier niveau de sécurité. Si le premier niveau de sécurité est nul, l'instruction d'écriture est une instruction classique. Si des clés de cryptage sont associées au premier niveau de sécurité, l'instruction d'écriture les prend en compte pour crypter le message.

Ainsi, la tâche transfert les messages du réseau 10 au réseau 11 et du réseau 11 au réseau 10 de façon à ce que la connexion de premier niveau de sécurité soit vue sur le réseau 10 comme une connexion de bout en bout entre la machine client et la machine serveur sans que l'application client ait à se soucier du traitement intermédiaire dans la machine passerelle 9.

Pour éviter que les fonctionnalités de l'application serveur, normalement accessibles par le port 1, ne soient accédées par une connexion non sécurisée sur le port 2, une sixième étape 44 commande à la couche réseau CR de la machine 9, d'éliminer tout message à destination du port 2, adressé à la machine serveur 13. Un système d'exploitation tel que par exemple LINUX fournit une commande connue sous le nom "ipchains -A input -j DENY" qui prend en paramètres un port de destination et une adresse réseau de destination. En donnant à ces paramètres, respectivement la valeur du port 2, par exemple 8080 et la valeur d'adresse réseau AR(13) de la machine 13, la couche réseau CR de la machine passerelle 9 peut identifier tout datagramme de message possédant dans son entête les valeurs des deux premiers paramètres et éliminer ainsi ce message.

De façon à mettre en oeuvre automatiquement le procédé précédemment décrit, la machine passerelle 9 héberge une application relais de sécurité 18. Un utilisateur commande une instruction de configuration de l'application relais de sécurité 18 pour chaque application serveur 17, 19, pour laquelle il souhaite un deuxième niveau de sécurité sur le réseau serveur 11. L'instruction de configuration prend en paramètres l'adresse réseau de la machine serveur, le numéro du port normalement accédé avec le premier niveau de sécurité et le numéro du port défini pour être accédé avec le deuxième niveau de sécurité. Dans le cas de l'application serveur 17 hébergée dans la machine serveur 13, les paramètres ont par exemple pour valeurs AR(13), 443 et 8080.

Chaque appel de l'instruction de configuration lance un premier processus 60 dans la machine passerelle 9 qui exécute la première étape 42 et la deuxième étape 43. Le deuxième port 3 est créé au moyen d'une instruction programmée Bind(any). Le déroutement est commandé par un premier appel système: system(buf) où buf est une valeur de tampon déterminée par une première instruction sprintf. La première instruction sprintf donne à la valeur buf une chaîne de caractères
"ipchains -A input -d V₁ V₂ -j REDIRECT V₃" où respectivement la variable V₁ est remplacée par l'adresse réseau fournie en paramètre, V₂ est remplacée par la valeur du port 1 et V₃ est remplacée par la valeur du port dynamique 3. Une instruction fork() génère ensuite un deuxième processus 61. De façon connue, l'instruction fork() crée le deuxième processus par duplication du premier processus avec héritage de sa mémoire au moment de l'exécution de l'instruction.

De façon avantageuse, le premier processus 60 exécute aussi la sixième étape 44. L'élimination est commandée par un deuxième appel système system(buf) où buf est une valeur de tampon déterminée par une deuxième instruction sprintf. La deuxième instruction sprintf donne à la valeur but une chaîne de caractères "ipchains -A input -d V₁ V₂ -j DENY" où respectivement la variable V₁ est remplacée par l'adresse réseau fournie en paramètre, V₂ est remplacée par la valeur du port 2.

Le deuxième processus exécute la troisième étape 45 et la quatrième étape 46. Une instruction Listen(port3) met le processus en écoute sur le deuxième port 3 créé dynamiquement par le premier processus. Le protocole du premier niveau de sécurité est initialisé, par exemple SSL. A détection d'une nouvelle connexion sur le deuxième port 3, une instruction pthread_create() génère une tâche (thread dans le vocabulaire courant informatique) pour la connexion détectée.

Au sein du deuxième processus, chaque détection de nouvelle connexion génère une nouvelle thread 62, 63, 64. L'intérêt des threads est qu'elles partagent toutes la mémoire du deuxième processus. Ainsi, à la fermeture d'une connexion, la thread disparaît mais des valeurs telles que les valeurs de négociation de la connexion restent présentes en mémoire du deuxième processus et peuvent être réutilisées pour une autre connexion mettant en jeu les mêmes aboutissants, application client, application serveur. Chaque thread exécute les phases 50 à 55 précédemment décrites. La thread 62 génère et dispose de l'interface de communication 56 sur le port 3 et de l'interface de communication 57 avec la couche transport CT de la machine 9 pour faire passer les messages de l'interface 56 à l'interface 57 et réciproquement, en adaptant le niveau de sécurité à la connexion sur le réseau 10 et à la connexion sur le réseau 11. Lorsque la thread 62 reçoit sur l'interface 56, le corps 31 du message 30 avec premier niveau de sécurité, elle applique le deuxième niveau de sécurité au corps 31 du message 30 pour le retransmettre à la couche réseau CR de la machine 9 par l'interface 57, de façon à ce que la couche réseau CR élabore le message 36 à destination de la machine serveur dont l'adresse est contenue dans le champ 34 et du port dont le numéro est contenu dans le champ 32 du message 36. De même, la thread 63 génère et dispose de l'interface de communication 58 sur le port 3 et de l'interface de communication 59 avec la couche transport CT de la machine 9 pour faire passer les messages de l'interface 58 à l'interface 59 et réciproquement, en adaptant le niveau de sécurité à la connexion sur le réseau 10 et à la connexion sur le réseau 11.

Comme il existe un processus pour chaque application serveur pour laquelle l'application relais de sécurité 18 a été configurée, il existe un deuxième processus pour chacune de ces applications serveur. L'intérêt de générer le deuxième processus au moyen du premier processus est d'éviter à avoir à reconfigurer l'application relais 18 si le deuxième processus se bloque, par exemple à cause d'une surcharge de connexions. Le premier processus surveille alors le deuxième processus de façon connue au moyen de signaux, de façon à relancer le deuxième processus en cas de défaut.

## Revendications

1. Procédé pour permettre à une application client (16) d'établir, d'une manière transparente sur un réseau client (10), une première connexion ayant un premier niveau de sécurité, avec un premier port (1) d'une application serveur (17) hébergée dans une machine serveur (13) reliée à un réseau serveur (11), pour émettre des messages (30) adressés à la machine serveur (13), les dits messages (30) passant du réseau client (10) au réseau serveur (11) par une couche réseau (CR) d'une machine passerelle (9), **caractérisé en ce qu'**il comprend:
- une première étape qui crée un deuxième port (3) dans la machine passerelle (9);
- une deuxième étape qui commande à la couche réseau (CR) de la machine passerelle (9), de dérouter vers le deuxième port (3), tout message à destination du premier port (1), adressé à la machine serveur (13);
- une troisième étape qui écoute le deuxième port (3);
- une quatrième étape qui génère dans la machine passerelle (9), une tâche pour établir ladite première connexion, lorsque la troisième étape détecte sur le deuxième port (3), une requête d'établissement de ladite première connexion.

2. Procédé selon la revendication 1, **caractérisé en ce qu'**il comprend :
- une cinquième étape qui définit un troisième port (2) de l'application serveur (17), destiné à recevoir au moins un des messages (30) avec un deuxième niveau de sécurité;
et **en ce que** ladite tâche comprend:
- une première phase qui établit ladite première connexion avec premier niveau de sécurité sur une première interface associée au deuxième port (3) et à ladite requête;
- une deuxième phase qui établit une deuxième connexion avec deuxième niveau de sécurité sur une deuxième interface à destination du troisième port (2) dans la machine serveur (13);
- une troisième phase qui écrit avec deuxième niveau de sécurité sur la deuxième interface tout message lu sur la première interface avec premier niveau de sécurité;
- une quatrième phase qui écrit avec premier niveau de sécurité sur la première interface tout message lu sur la deuxième interface avec deuxième niveau de sécurité.

3. Procédé selon la revendication 2, **caractérisé en ce qu'**il comprend:
- une sixième étape qui commande à la couche réseau (CR) de la machine passerelle (9), d'éliminer tout message à destination du troisième port (2).

4. Procédé selon la revendication 1 ou 2, **caractérisé en ce que** la première et la deuxième étape sont exécutées automatiquement par un premier processus de la machine passerelle (9) et **en ce que** ledit premier processus engendre un deuxième processus qui exécute la troisième et la quatrième étape.

5. Procédé selon la revendication 4, **caractérisé en ce que** la première, la deuxième et la sixième étape sont exécutées automatiquement par un premier processus de la machine passerelle (9) et **en ce que** ledit premier processus engendre un deuxième processus qui exécute la troisième et la quatrième étape.

6. Procédé pour permettre à une application client (16) d'établir, d'une manière transparente sur un réseau client (10), une première connexion ayant un premier niveau de sécurité, avec un premier port (1) d'une application serveur (17) hébergée dans une machine serveur (13) reliée à un réseau serveur (11), pour émettre des messages (30) adressés à la machine serveur (13), les dits messages (30) passant du réseau client (10) au réseau serveur (11) par une couche réseau (CR) d'une machine passerelle (9), **caractérisé en ce qu'**il consiste à activer, dans la machine passerelle, une application relais de sécurité qui déroute les messages de la première connexion, de façon transparente pour l'application client, de façon à établir une deuxième connexion ayant un deuxième niveau de sécurité avec l'application serveur, ladite deuxième connexion étant inconnue de ladite application client.

## Claims

1. Method to allow a client application (16) to establish, transparently on a client network (10), a first connection having a first security level, with a first port (1) of a server application (17) hosted on a server machine (13) connected to a server network (11), for sending messages (30) addressed to the server machine (13), said messages (30) passing from the client network (10) to the server network (11) via a network layer (CR) of a gateway machine (9), **characterised in that** it comprises:
- a first step that creates a second port (3) in the gateway machine (9);
- a second step that commands the network layer (CR) of the gateway machine (9) to divert to the second port (3) any message going to the first port (1), addressed to the server machine (13);
- a third step that listens to the second port (3);
- a fourth step that generates in the gateway machine (9) a task for establishing said first connection, when the third step detects, on the second port (3), a request for said first connection to be established.

2. Method according to Claim 1, **characterised in that** it comprises
- a fifth step that defines a third port (2) of the server application (17), intended to receive at least one of the messages (30) with a second security level;
and **in that** said task comprises:
- a first phase that establishes said first connection with a first security level on a first interface associated with the second port (3) and with said request;
- a second phase that establishes a second connection with a second security level on a second interface going to the third port (2) in the server machine (13);
- a third phase that writes, with a second security level, to the second interface, any message read on the first interface with a first security level;
- a fourth phase that writes, with a first security level, to the first interface, any message read on the second interface with a second security level.

3. Method according to Claim 2, **characterised in that** it comprises:
- a sixth step that commands the network layer (CR) of the gateway machine (9) to eliminate any message going to the third port (2).

4. Method according to Claim 1 or 2, **characterised in that** the first and second step are executed automatically by a first process of the gateway machine (9) and **in that** said first process generates a second process that executes the third and fourth step.

5. Method according to Claim 4, **characterised in that** the first, second and sixth step are executed automatically by a first process of the gateway machine (9) and **in that** said first process generates a second process that executes the third and fourth step.

6. Method to allow a client application (16) to establish, transparently on a client network (10), a first connection having a first security level, with a first port (1) of a server application (17) hosted on a server machine (13) connected to a server network (11), for sending messages (30) addressed to the server machine (13), said messages (30) passing from the client network (10) to the server network (11) via a network layer (CR) of a gateway machine (9), **characterised in that** it consists in activating, in the gateway machine, a security relay application that diverts messages from the first connection, transparently for the client application, so as to establish a second connection having a second security level with the server application, said second connection being unknown to said client application.

## Patentansprüche

1. Verfahren, das es einer Client-Anwendung (16) erlaubt, über ein Client-Netz (10) in transparenter Weise eine erste Verbindung, die ein erstes Sicherheitsniveau aufweist, mit einem ersten Port (1) einer Server-Anwendung (17) aufzubauen, die sich auf einem Server (13) befindet, der mit einem Server-Netz (11) verbunden ist, um Meldungen (30) auszusenden, die an den Server (13) adressiert sind, wobei die Meldungen (30) vom Client-Netz (10) auf das Server-Netz (11) über eine Netzschicht (CR) eines Gateways (9) laufen, **dadurch gekennzeichnet, daß** es folgendes umfaßt:
- einen ersten Schritt, in dem ein zweiter Port (3) in dem Gateway (9) erzeugt wird;
- einen zweiten Schritt, in dem der Netzschicht (CR) des Gateways (9) befohlen wird, alle Meldungen, die an den Server (13) mit Ziel erster Port (1) adressiert sind, auf den zweiten Port (3) umzuleiten;
- einen dritten Schritt, in dem der zweite Port (3) abgehört wird;
- einen vierten Schritt, in dem in dem Gateway (9) eine Aufgabe zum Aufbau der ersten Verbindung generiert wird, wenn im dritten Schritt auf dem zweiten Port (3) eine Anfrage zum Aufbau der ersten Verbindung detektiert wurde.

2. Verfahren gemäß Anspruch 1, **dadurch gekennzeichnet, daß** es folgendes umfaßt:
- einen fünften Schritt, in dem ein dritter Port (2) der Server-Anwendung (17) definiert wird, der dafür bestimmt ist, wenigstens eine der Meldungen (30) mit einem zweiten Sicherheitsniveau zu empfangen;
und wobei die genannte Aufgabe umfaßt:
- eine erste Phase, in der die erste Verbindung mit dem ersten Sicherheitsniveau über eine erste mit dem zweiten Port (3) und der Anfrage assoziierten Schnittstelle aufgebaut wird;
- eine zweite Phase, in der eine zweite Verbindung mit einem zweiten Sicherheitsniveau über eine zweite Schnittstelle mit Ziel dritter Port (2) in dem Server (13) aufgebaut wird;
- eine dritte Phase, in der mit dem zweiten Sicherheitsniveau über die zweite Schnittstelle alle Meldungen geschrieben werden, die über die erste Schnittstelle mit dem ersten Sicherheitsniveau gelesen werden;
- eine vierte Phase, in der mit dem ersten Sicherheitsniveau über die erste Schnittstelle alle Meldungen geschrieben werden, die über die zweite Schnittstelle mit dem zweiten Sicherheitsniveau gelesen werden.

3. Verfahren gemäß Anspruch 2, **dadurch gekennzeichnet, daß** es folgendes umfaßt:
- einen sechsten Schritt, der der Netzschicht (CR) des Gateways (9) befiehlt, alle Meldungen mit Ziel dritter Port (2) zu löschen.

4. Verfahren gemäß Anspruch 1 oder 2, **dadurch gekennzeichnet, daß** der erste und der zweite Schritt automatisch von einem ersten Prozeß des Gateways (9) ausgeführt werden und **dadurch**, daß der erste Prozeß einen zweiten Prozeß erzeugt, der den dritten und den vierten Schritt ausführt.

5. Verfahren gemäß Anspruch 4, **dadurch gekennzeichnet, daß** der erste, der zweite und der sechste Schritt automatisch von einem ersten Prozeß des Gateways (9) ausgeführt werden und **dadurch**, daß der erste Prozeß einen zweiten Prozeß erzeugt, der den dritten und den vierten Schritt ausführt.

6. Verfahren, das es einer Client-Anwendung (16) erlaubt, über ein Client-Netz (10) in transparenter Weise eine erste Verbindung, die ein erstes Sicherheitsniveau aufweist, mit einem ersten Port (1) einer Server-Anwendung (17) aufzubauen, die sich auf einem Server (13) befindet, der mit einem Server-Netz (11) verbunden ist, um Meldungen (30) auszusenden, die an den Server (13) adressiert sind, wobei die Meldungen (30) vom Client-Netz (10) auf das Server-Netz (11) über eine Netzschicht (CR) eines Gateways (9) laufen, **dadurch gekennzeichnet, daß** es darin besteht, in dem Gateway eine Sicherheits-Relais-Anwendung zu aktivieren, die die Meldungen der ersten Verbindung in für die Client-Anwendung transparenter Weise umzuleiten, dergestalt, daß eine zweite Verbindung aufgebaut wird, die ein zweites Sicherheitsniveau mit der Server-Anwendung hat, wobei die zweite Verbindung der Client-Anwendung unbekannt ist.
